# EUROPEAN PATENT APPLICATION

(11) **EP 1 621 489 A1**
(43) Date of publication of application: **01.02.2006**
(21) Application number: 05106609.0
(22) Date of filing: 19.07.2005
(51) Int. Cl.: B65G 47/14, B65G 25/08

(54) **Elevator with self-cleaning plates**

(30) Priority: 20.07.2004 IT UD20040150
(71) Applicant: Zoppo Vigna, Ezio, 22032 Albese Con Cassano CO (IT)
(72) Inventor: Zoppo Vigna, Ezio, 22032 Albese Con Cassano CO (IT)
(74) Representative: Petraz, Davide Luigi

(57) **Abstract**

Elevator (10) with self-cleaning plates to lift a plurality of objects from a first plane (12) to a second plane (13) raised with respect to the first plane (12), comprising lateral walls (14) disposed distanced from each other, at least a fixed plate (15) anchored on the lateral walls (14), at least a movable plate (16), associated with the fixed plate (15) and a movement mechanism (17) for the movable plate (16), in order to move it with alternate motion. The plate elevator (10) also comprises a covering layer or strip (21) interposed between part of the facing surfaces of the fixed plate (15) and the movable plate (16) and possibly between part of the surface of the movable plate (16) and the lateral walls (14).

## Description

### FIELD OF THE INVENTION

The present invention concerns an elevator with plates, used to lift and reciprocally separate small objects such as screws, bolts or other, moving them from an accumulation place to a positioning and/or discharge plane above.

The terms accumulation place and positioning plane, here and hereafter, are also intended to comprise parts of movement and conveyor systems, for example using rollers, belts or any type.

To be more exact, the elevator with plates normally comprises lateral walls, one or more fixed plates anchored to the latter, one or more movable plates, mating with the fixed plate(s), and a movement mechanism for the movable plates. If the plate elevator comprises two or more fixed plates, they are disposed staggered vertically one with respect to the other and the movable plate(s) is/are disposed between each pair of fixed plates. The movable plates too, in their non-operative condition, are staggered one with respect to the other and are normally connected to the same movement mechanism, which is able to move simultaneously all the movable plates with an alternate vertical motion, thus allowing the progressive lifting of the objects from one plane or level to the other, until the top of the plate elevator is reached.

### BACKGROUND OF THE INVENTION

An elevator with plates is known, used to lift and reciprocally separate small objects such as screws, bolts or other, moving them from an accumulation plane to a positioning and/or discharge plane, for example a discharge chute, or a conveyor element, disposed respectively upstream and downstream of the elevator and staggered vertically with respect to each other.

The plate elevator normally comprises a base, at least two lateral walls distanced from each other, a plurality of fixed plates, a plurality of movable plates and a movement mechanism for said movable plates.

For small size solutions, a single fixed plate and a single movable plate can be used, or two fixed plates and one movable plate, interposed between them.

The fixed plates are normally disposed perpendicularly to the lateral walls and are attached to the latter.

The fixed plates are also parallel and disposed staggered vertically one with respect to the other; in some solutions, the fixed plates are inclined by a determinate angle with respect to the base, in order to facilitate the progressive passage from one plane to the other of the elevator of the objects to be lifted.

In other solutions, the plates are vertical and have their edges inclined in order to facilitate the transfer of the objects.

Each movable plate is interposed between one pair of fixed plates and, with reference to the respective inactive positions, is vertically staggered with respect to the movable plate adjacent thereto, for a distance which normally corresponds to the ascending/descending travel of the plates.

The movable plates are normally all connected to a movement mechanism, which imparts to them a vertical alternate motion that allows the progressive lifting of the objects from the accumulation plane to the discharge chute.

The relative inclination of the upper edges of the plates with respect to the elements upstream and downstream allows to move the objects progressively, for every movement cycle, from one level to the one above.

One disadvantage of known elevators derives from the need to have spaces and fissures, both between the fixed plates and the movable plates, and also between the movable plates and the lateral walls, which spaces serve to prevent friction and slipping during the movement of the movable plates.

However, unwanted impurities, foreign bodies, or residues of the working of the objects to be lifted, or other, can infiltrate into these spaces, with a consequent seizure of the plates, or in any case interference with the correct movement of the movable plates.

Plate elevators are also known on which, to overcome this disadvantage, it is provided to use hydraulic, mechanical or pneumatic devices by means of which it is possible to clean the plates of impurities and foreign bodies. Such devices are very expensive and complex, however, and consequently are not economically compatible with plate elevators of small and average size.

Another disadvantage of conventional plate elevators is that the plates, both fixed and movable, if their constituent material requires it, must be subjected to costly heat hardening treatments, and also to costly surface finishing operations, necessary because the movable plates slide on the fixed plates and on the lateral walls during their movement.

One purpose of the present invention is to achieve a plate elevator in which the infiltration of impurities or other into the spaces that form between the fixed plates and the movable plates, and also between the movable plates and the lateral walls, is prevented in a simple, effective and safe manner, without the addition of complex auxiliary devices.

Another purpose of the present invention is to achieve a plate elevator in which both the fixed plates and the movable plates do not necessarily have to be subjected to heat treatments and specific working, so as to reduce the overall costs of producing the elevator itself.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purposes, a plate elevator of the type described above comprises at least two lateral walls, parallel and distanced from each other and defining a containing compartment for the objects to be lifted; at least a fixed plate, anchored perpendicularly to the lateral walls; at least a movable plate, associated with said fixed plate, and a movement mechanism for said movable plates.

According to a characteristic of the present invention, covering means are interposed between at least part of the surfaces in reciprocal contact of the fixed plate and the movable plate, which means serve to prevent impurities, working residues of the objects to be lifted or other, from penetrating into the fissures and spaces during the alternate motion of the movable plate.

According to an advantageous variant, the covering means are interposed between the movable plate and the lateral walls too.

In one embodiment of the invention, the plate elevator can comprise a plurality of fixed plates, for example two, three or more, disposed both parallel and distanced from each other, and also staggered vertically one with respect to the other, and a plurality of mating movable plates, two, three or more, each one interposed between every pair of fixed plates and vertically staggered with respect to the movable plate adjacent thereto. In this case, every movable plate and every fixed plate include covering means interposed between at least part of the surfaces of reciprocal contact with the walls fixed upstream and downstream and with the lateral walls.

According to a preferential embodiment, the covering means consist of at least a layer or strip of covering material, advantageously made of felt, Teflon®, Turcite® or other suitable material, which is able to incorporate said impurities and drag them with it, at the same time not impeding, but on the contrary facilitating, the correct movement of the movable parts and fixed parts of the elevator.

According to a first solution, the covering layer or strip is attached on every fixed plate and covers at least partly a surface of the latter facing towards the movable plate disposed downstream of it.

According to another solution, the layer or strip is attached, or also attached, on every movable plate and at least partly covers at least the surface of the latter facing towards the fixed plate disposed downstream of it; in an advantageous variant, the covering layer or strip also covers at least partly the surfaces of the movable plates facing towards the fixed lateral walls.

The plate elevator according to the present invention allows to prevent, in a simple, effective and inexpensive manner, impurities, possible working residues of the objects to be lifted or other, from becoming blocked both between the movable plates and the fixed plates, and also between the movable plates and the lateral walls, causing the elevator to malfunction or to seize up during functioning.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partly sectioned lateral view of the plate elevator according to the present invention;
- fig. 2 is a view from above of the plate elevator in fig. 1;
- fig. 3 is a perspective view of a detail in fig. 1.

### DETAILED DESCRIPTION OF A PREFERENTIAL FORM OF EMBODIMENT

With reference to the attached drawings, a plate elevator 10 according to the present invention is suitable to lift and progressively separate small objects such as screws, bolts or other, from an accumulation plane 12 to a discharge chute 13 disposed respectively upstream and downstream of the elevator 10 and vertically staggered with respect to each other.

It is obvious that the description that follows also extends to the cases where the plate elevator 10 is associated with conveyor devices, for example with rollers, disposed upstream and downstream thereof and cooperating therewith in the transfer from one place to another of said small objects.

The plate elevator comprises a base 11, a hopper 18, able to load the objects to be lifted onto the accumulation plane 12, two lateral walls 14, a plurality of fixed plates 15, a mating plurality of movable plates 16 and a movement mechanism 17 for said movable plates 16.

The two lateral walls 14 in this case are vertical and disposed at the sides of the base 11. Together with the fixed plates 15 and the movable plates 16, they form a containing compartment 22 for the objects to be lifted.

The fixed plates 15 are disposed in this case perpendicularly to the lateral walls and are anchored thereto so as to be distanced from each other, vertically staggered with respect to each other and inclined in this case by a determinate angle α with respect to the base 11.

The movable plates 16 are parallel to the fixed plates 15 and each of them is both interposed between every pair of fixed plates 15 and also staggered vertically with respect to the successive movable plate 16.

The lifting travel of the movable plates 16, which corresponds to the reciprocal stagger, is substantially equal to the stagger between the fixed plates 15.

The fixed plates 15 and the movable plates 16 are disposed so as to cover, all together, the difference in level and the distance between the accumulation plane 12 and the discharge chute 13.

The movement mechanism 17 comprises a support 19, on which all the movable plates 16 are mounted, and an actuator 20, mounted on the base 11, connected to the support 19 and able to simultaneously impart to all the movable plates 16 an equal vertical alternate motion.

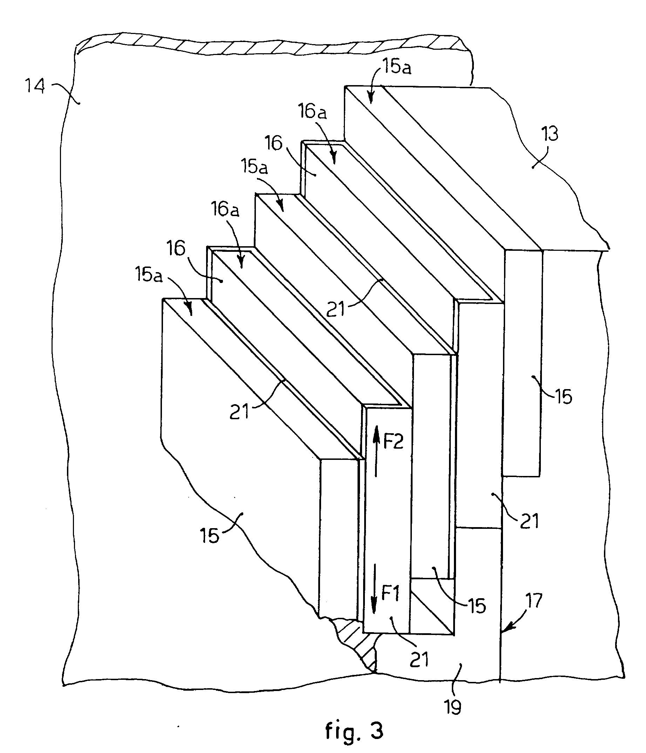

Each movable plate 16 is first moved downwards (direction F1 in fig. 3), so that an upper edge 16a is substantially aligned with an upper edge 15a of the fixed plate 15 disposed upstream thereof. In this way, the objects to be lifted, due to the effect of the inclination of both the fixed plates 15 and the movable plates 16, move from the edge 15a of the fixed plate 15, in which they are initially disposed, to the edge 16a of the movable plate 16.

Afterwards, the movable plate 16 is moved upwards (direction F2 in fig. 3), so as to align its upper edge 16a with the upper edge 15a of the fixed plate 15 disposed downstream thereof, unloading onto the latter the lifted objects.

In this way the objects are progressively lifted, plane by plane, from the accumulation plane 12 to the discharge chute 13.

Between each fixed plate 15 and each movable plate 16 a covering layer or strip 21 is interposed, made for example of felt, Teflon®, Turcite®, or other material having analogous or comparable characteristics. The covering layer or strip 21 fills at least a substantial part of the space between the fixed plate 15 and the relative adjacent movable plate 16 and prevents impurities, or other, from infiltrating into the fissures that form between the fixed plate 15 and the relative movable plate 16, particularly, during the movement of said plates.

The covering layer or strip 21 can be attached both to the fixed plates 15 and to the movable plates 16 in correspondence with the respective opposite surfaces that come into contact during the movement of the latter.

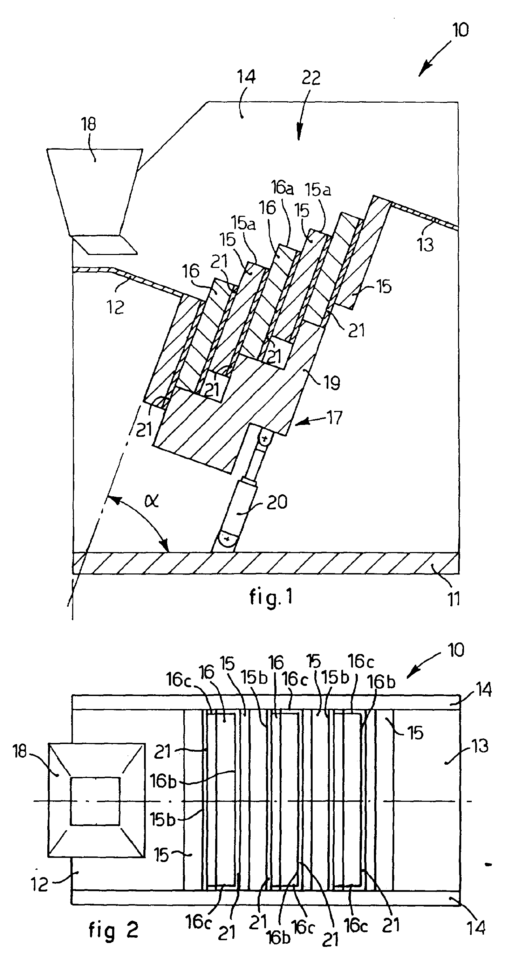

When the layer or strip 21 is attached to a fixed plate 15 (figs. 2 and 3), it covers a front surface 15b of the latter facing towards the movable plate 16 disposed downstream thereof.

When the layer or strip 21 is attached to a movable plate 16 (fig. 2), it advantageously covers both a first surface 16b facing towards the fixed plate 15 disposed downstream thereof, and also second surfaces 16c facing towards the lateral walls 14; this allows to prevent impurities or other from infiltrating between the movable plates 16 and the lateral walls 14.

Thanks to the presence of the covering layers or strips 21 which cover at least part of the reciprocally sliding surfaces of the plate elevator 10, we simultaneously obtain the advantage of not impeding the correct movement of the movable plates 16 and preventing infiltrations of impurities into the fissures, which impurities are drawn, together with the objects to be lifted, towards the discharge chute of the elevator 10.

It is clear that modifications and/or additions of parts may be made to the plate elevator 10 as described heretofore, without departing from the field and scope of the present invention.

According to a variant, not shown here, both the fixed plates and the movable plates are vertical but have the upper edge inclined downwards, so as to allow the objects to be lifted to slide from one plate to the other.

It is also clear that, although the present invention has been described with reference to some specific examples, a person of skill in the art shall certainly be able to achieve many other equivalent forms of elevators with self-cleaning plates, having the characteristics as set forth in the claims and hence all coming within the field of protection defined thereby.

## Claims

1. Plate elevator to lift a plurality of objects from a first plane (12) to a second plane (13) raised with respect to said first plane (12), comprising lateral walls (14) disposed distanced from each other, to define a containing compartment (22) for said objects, at least a fixed plate (15) anchored on said lateral walls (14), at least a movable plate (16), associated with said fixed plate (15) and a movement mechanism (17) for said at least one movable plate (16), in order to move it with alternate motion, **characterized in that** covering means (21) are interposed at least between part of the facing surfaces of said fixed plate (15) and said movable plate (16), to prevent impurities from infiltrating into the fissures and spaces that form between said fixed plate (15) and said movable plate (16) at least during the alternate motion of the latter.

2. Plate elevator as in claim 1, **characterized in that** said covering means (21) are interposed between said movable plate (16) and said lateral walls (14).

3. Plate elevator as in claim 1 or 2, **characterized in that** said covering means comprise at least a covering layer or strip (21) disposed so as to be interposed between the facing surfaces of said movable plate (16) and of said fixed plate (15), and also between the facing surfaces of said movable plate (16) and said lateral walls (14).

4. Plate elevator as in claim 1, comprising two or more of said fixed plates (15) disposed both distanced from each other and also staggered vertically one with respect to the other, and two or more of said movable plates (16), each one interposed between a pair of said fixed plates (15) and staggered vertically with respect to said adjacent movable plate (16), **characterized in that** said covering layer or strip (21) is attached on each of said fixed plates (15) and at least partly covers a surface (15b) of said fixed plates (15) facing towards the relative movable plate (16), disposed downstream thereof.

5. Plate elevator as in claim 1, comprising two or more of said fixed plates (15) disposed both distanced from each other and also staggered vertically one with respect to the other, and two or more of said movable plates (16), each one interposed between a pair of said fixed plates (15) and staggered vertically with respect to said adjacent movable plate (16), **characterized in that** said covering layer or strip (21) is attached on each of said movable plates (16) and at least partly covers a first surface (16b) of said movable plates (16) facing towards the relative fixed plate (15) disposed downstream thereof.

6. Plate elevator as in claim 5, **characterized in that** said covering layer or strip (21) covers at least partly second surfaces (16c) of each of said movable plates (16) facing towards said lateral walls (14).

7. Plate elevator as in the preceding claims, **characterized in that** said covering layer or strip (21) consists of felt.

8. Plate elevator as in any claim from 1 to 7, **characterized in that** said layer or strip (21) consists of Teflon®.

9. Plate elevator as in any claim from 1 to 7, **characterized in that** said layer or strip (21) consists of Turcite®.
